# EUROPÄISCHE PATENTSCHRIFT

(11) **EP 1 829 740 B1**
(45) Veröffentlichungstag und Bekanntmachung des Hinweises auf die Patenterteilung: **11.11.2009**
(21) Anmeldenummer: 07001570.6
(22) Anmeldetag: 25.01.2007
(51) Int. Cl.: B60N 2/46

(54) **Rücksitzlehne mit höhenverstellbarer Mittelarmlehne**
Seat backrest with height adjustable centre arm rest
Dossier doté d'un accoudoir réglable en hauteur

(30) Priorität: 03.03.2006 DE 102006010376
(43) Veröffentlichungstag der Anmeldung: 05.09.2007
(73) Patentinhaber: BOS GmbH & Co. KG, 73760 Ostfildern (DE)
(72) Erfinder: Schlecht, Werner P., 71665 Vaihingen/Enz (DE); Salewski, Jürgen, 40599 Düsseldorf (DE); Bohlke, Hartmut, 42369 Wuppertal (DE); Sitzler, Wolfgang, 42111 Wuppertal (DE); Büschgens, Olaf, 47877 Willich (DE)
(74) Vertreter: Rüger, Barthelt & Abel Patentanwälte

(56) Entgegenhaltungen:
- EP-A- 0 670 241
- EP-A- 0 751 037
- GB-A- 2 194 305

## Beschreibung

In größeren Pkw sind heutzutage Mittelarmlehnen üblich. Die Rücksitzlehne ist in zwei Abschnitte, einen linken und einen rechten Abschnitt aufgeteilt, wodurch ein mittiger Zwischenraum entsteht. Der mittige Zwischenraum wird häufig auch dazu verwendet, hier eine Durchladeöffnung bereitzustellen, um bei Bedarf beispielsweise Skier im Fahrgastraum unterzubringen. Diese sind zu lang, um im Kofferraum Platz zu finden, weshalb sie vom Kofferraum her in einen Skisack in den Fahrgastraum eingeschoben werden.

Bei Nichtgebrauch ist diese Öffnung durch ein Polsterteil verschlossen, das als Mittelarmlehne dienen kann. Im hochgeklappten Zustand bildet das Polsterteil eine Rücksitzlehne für einen dritten mittigen Platz auf der Rücksitzbank.

Bei anderen Ausführungsformen ohne Durchladeeinrichtung ist trotzdem eine Mittearmlehne vorgesehen, die im hochgeklappten Zustand das Sitzen auf dem mittleren Platz ermöglicht, während sie im heruntergeklappten Zustand die besagte Armlehnenfunktion für die beiden Fondpassagiere hat.

Bei den bisher bekannten Ausführungsformen der Mittelarmlehne steht lediglich eine Gebrauchshöhe zur Verfügung, die sich aus der konstruktiven Dicke der Mittelarmlehne und deren Schwenkachse ergibt.

Aus der EP 0 751 037 A1 ist eine solche Mittelarmlehne bekannt. Zu der Mittelarmlehne gehört ein Armlehnenunterteil, das zwischen den beiden Rücksitzlehnen anscharniert ist. Es lässt sich um eine Achse quer zur Fahrzeuglängsachse hochklappen.

Das Armlehnenunterteil ist an seinem von dem Klappscharnier abliegenden Vorderende taschenförmig gestaltet und ansonsten nach oben offen. In diesem Bereich befindet sich ein Armlehnenoberteil. Das Armlehnenoberteil ist mit dem Armlehnenunterteil über ein Schiebegelenk im Bereich der Tasche des Unterteils verbunden und außerdem oberhalb des Klappscharniers ebenfalls zwischen den Rücksitzlehnen gelagert. Beim Hochklappen der bekannten Mittelarmlehne taucht das Armlehnenoberteil zunehmend in die Tasche des Armlehnenunterteils ein. Während es beim Herunterklappen der Mittelarmlehne aus dieser Tasche herausgezogen wird.

Zufolge dieser Anordnung kann das Armlehnenoberteil nicht gepolstert ausgeführt werden. Wegen der Überlappung zwischen Armlehnenunterteil und Armlehnenoberteil im Bereich der Vorderkante der Mittelarmlehne können außerdem am Oberteil hässliche Schleifspuren auftreten, oder aber, wenn diese vermieden werden sollen, ist dort ein Spalt vorhanden, in den Teile hineinfallen können. Eine Weiterbildung im Sinne einer Höhenverstellung der Mittelarmlehne ist nicht möglich.

Ausgehend hiervon ist es Aufgabe der Erfindung, eine Mittelarmlehne zu schaffen, die in Funktion und Weiterbildungsmöglichkeit flexibler ist.

Diese Aufgabe wird erfindungsgemäß durch die Anordnung mit den Merkmalen des Anspruches 1 gelöst.

Bei der neuen Rücksitzlehne ist zwischen dem linken und dem rechten Abschnitt in der bekannten Weise ein Zwischenraum vorgesehen, in dem eine Mittelarmlehne anscharniert ist. Im hochgeklappten Zustand bildet sie eine durchgehende Verlängerung der Rücksitzlehne, während sie heruntergeklappt eine etwa horizontal verlaufende Armauflagefläche bereit stellt.

Die neue Mittelarmlehne teilt sich in zwei Teile, von denen bezogen auf die Armlehnenstellung der eine das Unterteil und der andere das Oberteil bildet. Diese beiden Teile sind über ein Gelenk miteinander verbunden. Mit Hilfe eines Mechanismus lässt sich der Abstand zwischen dem Unterteil und dem Oberteil variieren.

Mit Hilfe der neuen Anordnung ist es so ohne weiteres möglich, die eigentlich an dem Oberteil ausgebildete Armauflagefläche in eine ergonomisch günstige Höhe zu bringen.

Außerdem kann die Höhenverstellbarkeit des Oberteils dazu verwendet werden, eine möglichst große Durchgangsöffnung für eine Durchladeöffnung zu schaffen. In diesem Falle wird die Mittelarmlehne möglichst tief unten in der Nähe der Sitzfläche anscharniert. Durch Herunterklappen der Mittelarmlehne unter Zusammenklappen des Oberteils gegenüber dem Unterteil wird erreicht, dass die Armlehne nach oben sehr wenig aufbaut und eine große Fläche an der Trennwand zwischen Fahrgastraum und Kofferraum freigibt. Naturgemäß befindet sich in dieser Stellung die Armauflagefläche in einer sehr tiefen Stellung, in der die Mittelarmlehne die Funktion als Armlehne nicht erfüllen kann. Sie fungiert eigentlich nur als herausklappbarer Teil der Rückenlehne. Aufgrund der Einstellbarkeit des Oberteils gegenüber dem Unterteil kann gleichwohl das Oberteil in eine Position gebracht werden, die ein ergonomisch angenehmes Abstützen des Arms auf dem Lehnenpolster gestattet.

Sehr einfache konstruktive Verhältnisse ergeben sich, wenn die Armlehne um eine ortsfeste Achse schwenkbar ist, die sich in dem Zwischenraum zwischen beiden Rücklehnenabschnitten befindet. Die Achse verläuft horizontal sowie quer zur Fahrzeuglängsachse.

Es versteht sich, dass die Mechanik, um die Höhenverstellbarkeit erreichen zu können, naturgemäß mit dem Mittelarmlehnenunterteil zusammenwirkt und die Schwenkachse am Unterteil angreift.

Um eine möglichst große Durchladeöffnung schaffen zu können, befindet sich die Achse in der Nähe der Unterkante der Rücksitzlehne.

Im einfachsten Falle ist die Achse von einer durchgehenden Stange gebildet. Sie kann auch von zwei einzelnen Bolzen oder Nietbolzen gebildet sein, wenn dies die Gestaltung des Armlehnenunterteils zulässt.

Das Armlehnenoberteil trägt zweckmäßigerweise eine Polsterfläche, die bei heruntergeklappter Armlehne nach oben zeigt. In ähnlicher Weise ist vorteilhafterweise das Armlehnenunterteil ebenfalls mit einer Polsterfläche versehen, damit die Armlehne als gepolsterte Rückenlehne dienen kann, wenn die Armlehne nach oben geklappt ist.

Besonders einfache und stabile Konstruktionsverhältnisse ergeben sich, wenn das Armlehnenoberteil zwei Seitenwände sowie eine Stirnwand aufweist. Das Armlehnenunterteil kann in ähnlicher Weise angenähert becherartig gebildet sein, indem hier ebenfalls zwei Seitenwände und eine Stirnwand vorhanden sind. Die Stirnwände des Ober- und des Unterteils zeigen bei heraufgeklappter Armlehne nach oben.

Die in der erwähnten Weise etwa becherförmig gestalteten Armlehnenteile können teleskopartig ineinander greifen, so dass der Innenraum durch die einander übergreifenden Seitenwände immer nach außen verschlossen bleibt. Dadurch wird gleichzeitig ein Einklemmschutz gewährleistet. Ein großer Hub bei gleichzeitig relativ geringer Verschwenkung des Winkels des Oberteils wird erreicht, wenn das Gelenk im Bereich des vorderen Endes der Armlehne angeordnet ist, das bei heraufgeklappter Armlehne nach oben zeigt.

Das Gelenk ist im einfachsten Falle ein Scharnier derart, dass die beiden Armlehnenteile lediglich bezüglich einer Achse gegeneinander verschwenkbar sind, wobei die Scharnierachse horizontal sowie quer zur Längsachse der Armlehne sowie des Kraftfahrzeugs verläuft, womit die Scharnierachse parallel zu der Schwenkachse liegt, um die herum die Armlehne zwischen den beiden Funktionsstellungen hin und her schwenkbar ist.

Der Mechanismus zum Verschwenken des Armlehnenoberteils gegenüber dem Armlehnenunterteil kann so gestaltet sein, dass beim Herunterschwenken der Armlehne in die Armlehnenstellung selbsttätig das Armlehnenoberteil von dem Armlehnenunterteil um einen vorbestimmten Hub weg bewegt wird.

Im Sinne einer ergonomischen Verbesserung ist es möglich, den Mechanismus so zu gestalten, dass der Hub verstellbar ist.

Eine sehr einfache Gestaltung des Mechanismus wird erreicht, wenn zur selbsttätigen Verstellung des Armlehnenoberteils gegenüber dem Unterteil der Mechanismus eine Kurvenbahn aufweist. Die Kurvenbahn kann etwa mittig bezogen auf die Breite der Armlehne vorgesehen sein. Eine Verbesserung bei gegebenen Elastizitätsverhältnissen ergibt sich, wenn zwei Kurvenbahnen neben den Seiten der Armlehne angeordnet sind. Hierdurch wird zwangsläufig eine Verwindung des Oberteils bezüglich der Längsachse vermieden, wenn sonst die Steifigkeit nicht ausreicht. Dafür ist die Verwendung einer einzigen Kurvenbahn konstruktiv günstiger, wenn es um die Verstellbarkeit des Hubs geht.

Der Mechanismus weist ferner zweckmäßigerweise einen Steuerhebel auf, der mit der betreffenden Kurvenbahn zusammenwirkt.

Wenn die Länge des Steuerhebels verstellbar ist, kann dadurch auf einfache Weise der Hub verändert werden, um den das Armlehnenoberteil beim Herunterschwenken der Armlehne vom Unterteil weg geschwenkt wird.

Die konstruktiven Verhältnisse vereinfachen sich, wenn der Steuerhebel in dem Armlehnenunterteil um eine zu der Schwenkachse parallele Achse bewegbar ist.

Der Steuerhebel kann wahlweise als einarmiger oder als zweiarmiger Hebel ausgebildet sein. Im Falle der Ausbildung als zweiarmiger Hebel arbeitet einer der Arme mit der Kurvenbahn zusammen und der andere ist über einen Koppelhebel mit einem ortsfesten Widerlager verbunden.

Zur Verstellung des Hubs ist es grundsätzlich möglich, wahlweise den einen oder den anderen Arm entsprechend konstruktiv zu gestalten. Zweckmäßigerweise wird jedoch jener Arm längenverstellbar ausgeführt, der mit der Kurvenbahn zusammenwirkt, da dieser der längerer Arm ist, so dass günstigere Platzverhältnisse entstehen.

Bei Verwendung eines einarmigen Hebels als Steuerhebel ist ein Anschlag vorgesehen, der ortsfest ist und der die Schwenkbewegung des einarmigen Hebels in die selbe Drehrichtung wie die Schwenkbewegung der Armlehne beim Herunterschwenken begrenzt. Mit Hilfe einer Feder ist der Hebel gegen diesen Anschlag elastisch vorgespannt.

Der längenverstellbare Hebel oder Arm weist zwei längliche Teile auf, die aneinander geführt sind. Die beiden Teile sind durch eine Feder zweckmäßigerweise im Sinne einer Verlängerung des aus den beiden Teilen bestehenden Arms oder Hebels vorgespannt. Dadurch wird bewirkt, dass bei unbelasteter Mittelarmlehne lediglich durch Auslösen des Sperrmechanismus das Armlehnenoberteil nach oben bewegt wird.

Der Verstelleinerichtung ist vorteilhafterweise eine Rasteinrichtung zugeordnet, die willkürlich durch den Benutzer lösbar ist. Die Rasteinrichtung ist so gestaltet, dass eine selbsttätige Verstellung bei Belastung des Armlehnenoberteils ausgeschlossen ist. Es ist auch möglich, eine Verriegelung in beiden Richtungen zu erreichen, wenn die Rasteinrichtung entsprechend gestaltet ist.

Im Übrigen sind Weiterbildungen der Erfindung Gegenstand von Unteransprüchen.

In der Zeichnung sind Ausführungsbeispiele des Gegenstands der Erfindung dargestellt, es zeigen:
- Fig. 1: den aufgebrochenen Fondbereich eines Pkws mit Blick gegen die hintere rechte Innenseite in einer vereinfachten perspektivischen Darstellung;
- Fig. 2: den Pkw nach Fig. 1 mit heruntergeklappter Mittelarmlehne, in der Stellung mit großer Dicke;
- Fig. 3: den Pkw nach Fig. 2 mit zusammengeklappter Mittelarmlehne;
- Fig. 4: die Mittelarmlehne nach den Fig. 1 bis 3 in einem Längsschnitt, mit einer schematisierten Darstellung des Mechanismus zum Bewegen des Armlehnenoberteils in stark schematisierter Form;
- Fig. 5: die Armlehne nach Fig. 4 im hochgeklappten Zustand;
- Fig. 6: eine Ausführungsform des Steuerhebels der Armlehne nach Fig. 4 zur Veränderung des Hubs, in einer perspektivischen Explosionsdarstellung;
- Fig. 7 und 8: ein weiteres Ausführungsbeispiel für den Mechanismus zum Bewegen des Armlehnenoberteils in Verbindung mit der Armlehne in unterschiedlichen Positionen, in einer Schnittdarstellung ähnlich den Fig. 4 und 5.

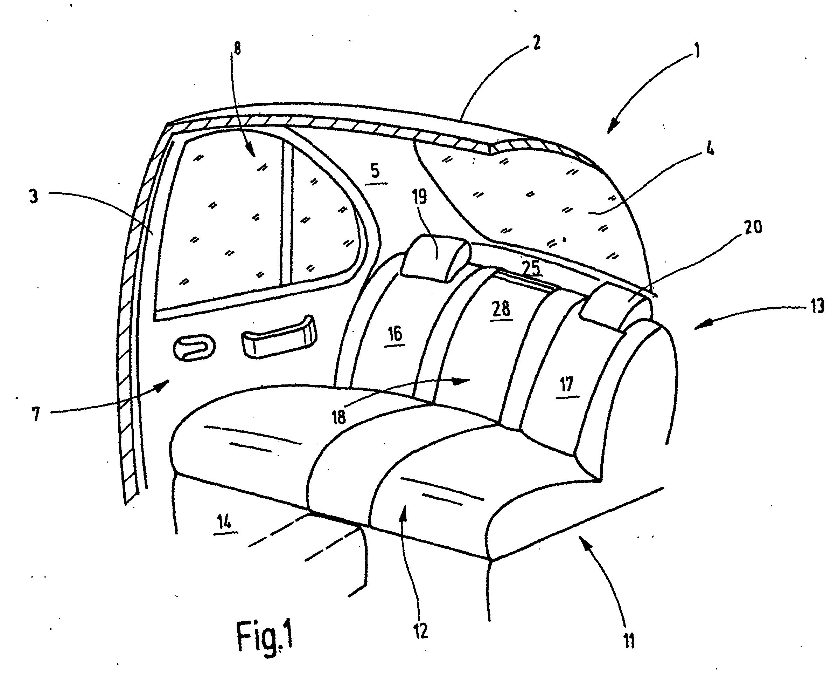

Fig. 1 stellt den aufgebrochenen abgeschnittenen Fondbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen, wie Versteifungen und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Soweit nichts anderes angegeben ist, beziehen sich Begriffe wie links, rechts, oben und unten auf Richtungen am Kraftfahrzeug selbst, in der üblicherweise verwendeten Weise.

Der veranschaulichter Karosserieabschnitt 1 weist ein Dach 2 auf, von dem seitlich eine B-Säule 3 nach unten zu einer nicht gezeigten Bodengruppe führt. Eine entsprechenden B-Säule wäre auf der weggebrochenen linken Kraftfahrzeugseite zu denken. Das Dach 2 geht an seiner Hinterkante in ein Heckfenster 4 über. Seitlich endet das Heckfenster an einer C-Säule 5, die sich in Abstand zu der B-Säule 3 befindet. Die C-Säule 5 ist spiegelbildlich zu der weggeschnittenen C-Säule und trägt eine nicht weiter zu erkennende Innenverkleidung.

Zwischen der B-Säule 3 und der C-Säule 5 ist an der B-Säule 3 eine hintere Seitentür 7 in bekannter Weise anscharniert. Die Seitentür 7 enthält, wie bei Kraftfahrzeugen üblich, ein Fenster 8.

Auf der Höhe der hinteren Seitentür 7 befindet sich eine Rücksitzbank 11, zu der eine Sitzfläche 12 sowie eine Rücksitzlehne 13 gehören. Die Sitzfläche 12 liegt auf einer Sockelfläche 14 auf, die zu der Bodengruppe gehört und in der Fußräume 14 ausgebildet sind.

Knapp unterhalb der Oberkante der Rücksitzlehne 3 befindet sich eine Hutablage 15, die sich zu der Unterkante der Heckscheibe 4 erstreckt.

Die Rücksitzlehne 13 gliedert sich in einen rechten Rückenlehnenabschnitt 16 sowie einen linken Rückenlehnenabschnitt 17, die voneinander ein Stück weit beabstandet sind. In diesem Zwischenraum befindet sich ein Rückenlehnenabschnitt 18, der gleichzeitig in einer anderen Funktionsstellung eine Mittelarmlehne bildet und deswegen im folgenden auch so bezeichnet wird. Die Mittelarmlehne 18 ist in der Nähe ihrer Unterkante anscharniert, wobei die Schwenkachse außerdem in der Nähe jener Fläche liegt, die bei heraufgeklappter Mittelarmlehne 18 nach vorne zeigt. In der hochgeklappten Stellung füllt die Mittelarmlehne 18 vollständig den Raum zwischen den beiden Rückenlehnenabschnitten 16 und 17 aus. Es entsteht so ein dritter Notsitz. An der Oberkante der Rückenlehnenabschnitte 16 und 17 befinden sich Kopfstützen 19 und 20.

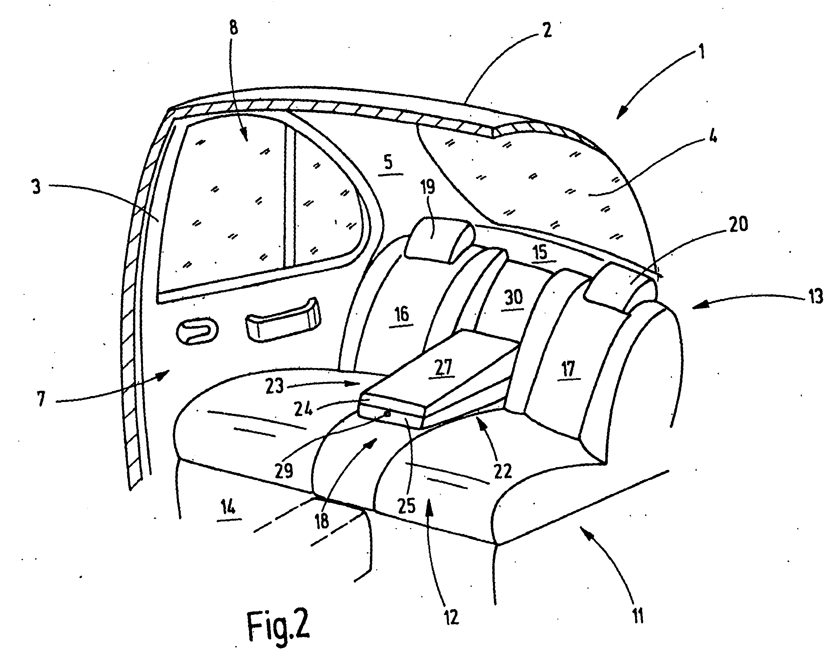

Während Fig. 1 den hochgeklappten Zustand der Mittelarmlehne 18 veranschaulicht zeigt Fig. 2 den heruntergeklappten Zustand. Wie aus Fig. 2 zu erkennen ist, setzt sich die Mittelarmlehne 18 aus einem Mittelarmlehnenunterteil 22 und einem Mittelarmlehnenoberteil 23, nachfolgend nur noch als Oberteil und Unterteil bezeichnet, zusammen. Das Oberteil 23 und das Unterteil 22 bilden jeweils Stirnseiten 24 und 25, die im Wesentlichen in Verlängerung zueinander verlaufen und in der heruntergeklappten Stellung gemäß Fig. 2 nach vorne und in der heraufgeklappten Stellung gemäß Fig. 1 nach oben zeigen. In der Nähe der beiden Stirnseiten 24 und 25 ist das Oberteil 23 an das Unterteil 22 anscharniert, das seinerseits zwischen den beiden Rückenlehnenabschnitten 16 und 17 schwenkbar gelagert ist.

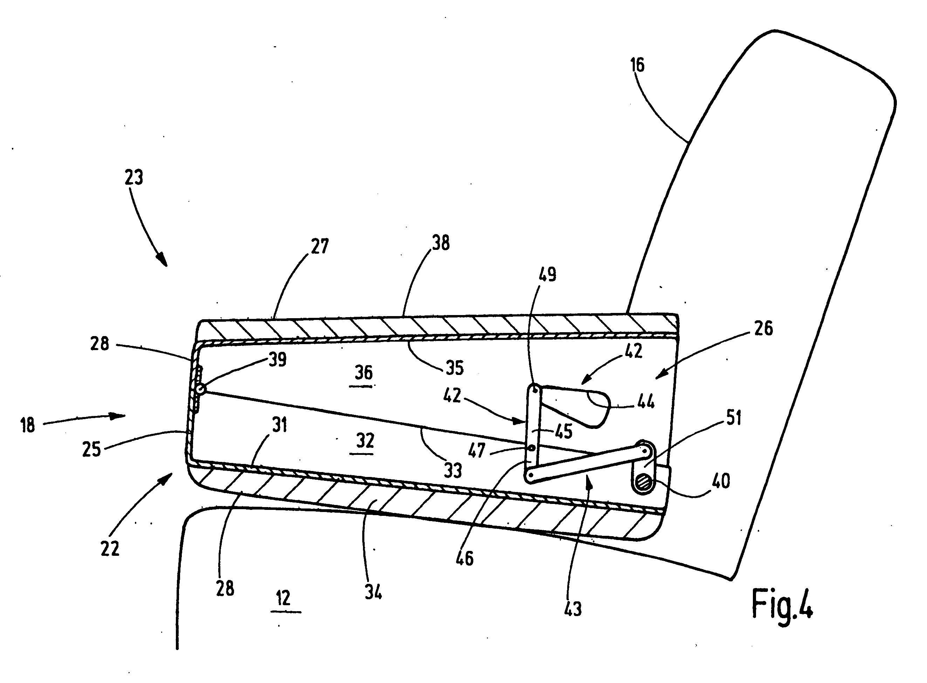

Ein innerhalb der Mittelarmlehne 18 vorhandener Mechanismus 26 (Fig. 4) steuert die Relativbewegung zwischen dem Oberteil 23 und dem Unterteil 22.

In der herruntergeklappten Stellung bildet eine Fläche des Oberteils 23 der Mittelarmlehne 18 eine Armauflagefläche 27, die in der Gebrauchsstellung etwa horizontal liegt. Das Unterteil 22 dagegen bildet in der hochgeklappten Stellung eine Rückenlehnenfläche 28.

Die Breite der beiden Stirnflächen 24, 25 über alles entspricht der Tiefe der beiden Rückenlehnenabschnitte 16 und 17 im Bereich deren Oberkante, so dass sich in der hochgeklappten Stellung gemäß Fig. 1 eine durchgehende Linie an der Oberkante der Rückenlehne 13 einstellt.

Im hochgeklappten Zustand ergänzt außerdem die Rückenfläche 28 den Verlauf zwischen den beiden Rückenlehnenabschnitten 16 und 17.

Die Funktion der dargestellen Mittelarmlehne 18 ist wie folgt: In der hochgeklappten Stellung gemäß Fig. 1 dient die Mittelarmlehne 18 als Rückenlehne für den dritten mittleren Sitz auf der Rücksitzbank 11. Wenn dieser Platz nicht benutzt ist, kann die Mittelarmlehne 18 aus der Stellung nach Fig. 1 in die Stellung nach Fig. 2 geklappt werden. Dabei schwenkt sie um eine in der Nähe der Rückenfläche 28 und an der Unterkante des Unterteils 22 gelegene Achse. Die Achse liegt horizontal und außerdem quer zur Fahrzeuglängsachse.

Beim Herunterschwenken wird mit Hilfe des Mechanismus 26 außerdem dafür gesorgt, dass das Oberteil 23 gegenüber dem Unterteil 22 nach oben geschwenkt wird, um die Armauflagefläche 27 in eine ergonomisch angenehme Höhe zu bringen. Bei dieser Schwenkbewegung vergrößert sich die Dicke der Mittelarmlehne 18 an dem von den Stirnseiten 24 und 25 abliegenden Ende. Während im hochgeklappten Zustand die Dicke der Mittelarmlehne 18 an dieser Stelle der Dicke der beiden Rückenabschnitte 16 und 17 entspricht, ist sie im heruntergeklappten Zustand deutlich dicker.

Die Schwenkbewegung nach unten wird entweder dadurch begrenzt, dass die Mittelarmlehne 18 mit ihrer Rückenfläche 28 auf dem Sitz 12 aufliegt oder indem entsprechende interne Anschläge vorgesehen sind.

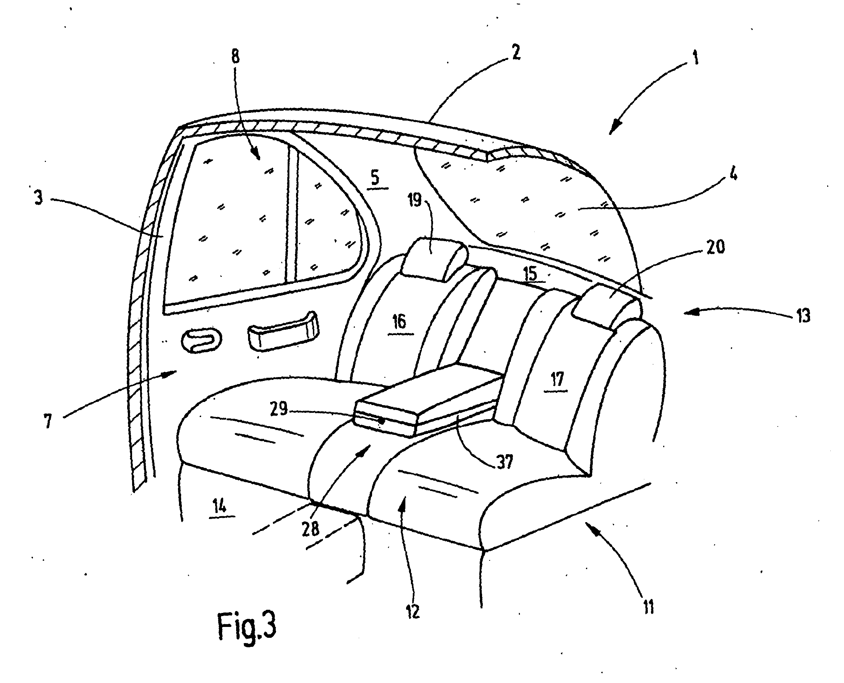

Bei entsprechender Gestaltung des Mechanismus 26 kann außerdem gemäß Fig. 3 die Dicke der Mittelarmlehne 18 an dem von den Stirnflächen 24 und 25 abliegenden Ende geändert werden. Hierzu wird ein Betätigungsknopf 29 niedergedrückt. Das Oberteil 23 kann daraufhin in Richtung auf das Unterteil 22 niedergedrückt werden. Diese Verstellbarkeit kann entweder dazu benutzt werden, die Armauflagefläche 27 in eine ergonomisch günstige Höhe zu bringen oder dazu eine Durchladeöffnung (nicht gezeigt), die in der Schottwand 30 zwischen dem Fahrgastraum und dem Kofferraum enthalten ist, vollständig freizugeben.

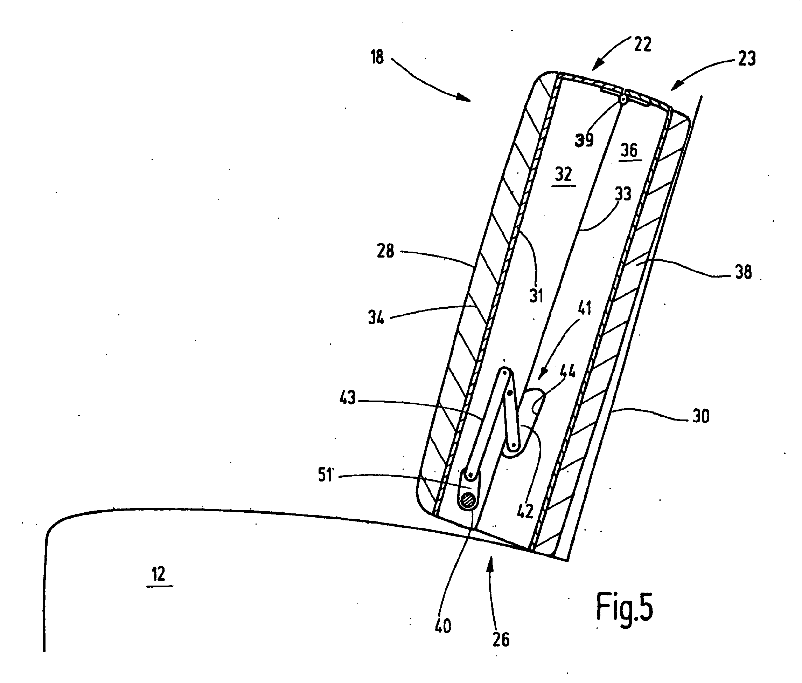

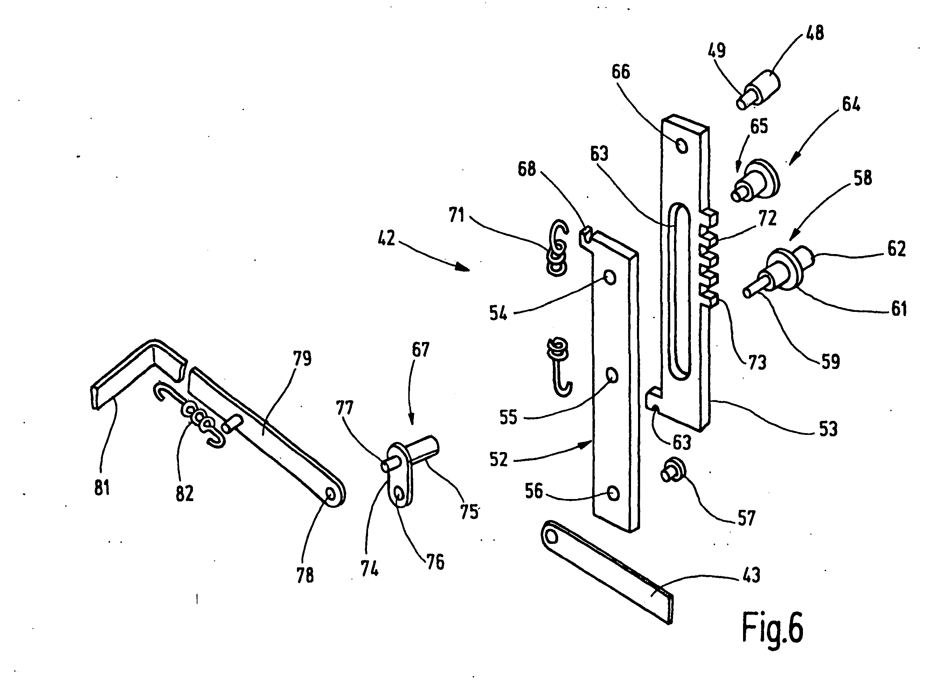

Anhand der Figuren 5 und 6 wird nunmehr nachstehend der Mechanismus 26 erläutert, der eine selbsttätige Verschwenkung des Oberteils 22 gegenüber dem Unterteil 23 bewirkt, wenn die Mittelarmlehne 18 zwischen ihren beiden Betriebsstellungen hin und her geschwenkt wird.

Wie Fig. 4 erkennen lässt, zeigt das Unterteil 22 eine schalenähnliche Gestalt, die nach oben und nach hinten, das heißt bezogen auf die Darstellung von Fig. 4 nach rechts offen ist. Sie setzt sich aus einer Grundplatte 31, der bereits erwähnten Stirnwand 25 sowie zwei Seitenwänden 32 zusammen, die etwa parallel zueinander und rechtwinklig zu der Grundplatte 31 verlaufen. Wegen der längs geschnittenen Darstellung ist lediglich die eine der beiden Seitenwände, nämlich die rechte, zu erkennen. Die Seitenwand 32 endet an einer Oberkante 33.

Je nach Ausführungsform kann die Grundplatte 31 mit den Seitenwänden 32 und der Stirnwand 25 ein einstückiges Blechformteil bilden.

Auf der Außenseite der Grundplatte ist ein Polster 34 befestigt, das die Rückenanlagefläche 28 bildet. Das Polster 34 überdeckt die gesamte Fläche der Grundplatte 31. Deren Abmessungen entsprechen dem Zwischenraum zwischen den beiden Rückenlehnenabschnitten 16 und 17 und der Sitzfläche 12.

Das Oberteil 23 weist einen ähnlichen schalenförmigen Aufbau auf, der bezogen auf Fig. 4 nach unten sowie nach hinten offen ist. Zu dem Oberteil gehören eine Grundplatte 35, die erwähnte Stirnseite 24 sowie zwei Seitenwände 36. Die Seitenwände 36 enden an einer Oberkante 37 (Fig. 3).

Auf der Außenseite der Grundplatte 35 liegt ein Polster 38 auf, dessen Außenseite die Armauflagefläche 27 darstellt.

Das Oberteil 23 übergreift mit seinen beiden Seitenwänden 36 die Seitenwände 32 des Unterteils 22 und zwar so, dass zweckmäßigerweise in keiner Funktionsstellung ein scherenartiger Spalt zwischen der Oberkante 33 und der Oberkante 37 der beiden Armlehnenteile 22, 23 entsteht.

Die beiden Armlehnenteile 22, 23 sind durch ein Scharnier 39 gelenkig miteinander verbunden. Das Scharnier 39 ist an der Innenseite der beiden Stirnseiten 24, 25 angebracht und verbindet diese. Die Achse des Scharniers 39 steht auf der Zeichenebene senkrecht und liegt damit rechtwinklig zur Längsachse der Mittelarmlehne 18, das heißt quer zur Längsachse des Fahrzeugs. In der hochgeklappten Stellung liegt diese Achse oben.

Zu dem Mechanismus 26, der die Zwangsbewegung zwischen dem Oberteil 23 und dem Unterteil 22 steuert, gehören eine Tasche 41, ein Steuerhebel 42 sowie ein Koppelhebel 43.

Mit Hilfe des Unterteils 22 ist die Mittelarmlehne an dem Kraftfahrzeug angelenkt. Hierzu führt durch die beiden Seitenwände 32 an der entsprechenden Stelle eine Achsenstange 40, die in dem Kraftfahrzeug drehfest verankert ist. Die korrespondierenden Bohrungen in den Seitenwänden 32 und eventuelle Schlitze in den Seitenwänden 36 für den Durchtritt der Achsstange 40 sind verdeckt und nicht erkennbar.

Die Tasche 41 ist nach außen verschlossen und bildet an der Oberkante (oben bezogen auf die Darstellung) eine Nockenbahn 44, die ungefähr parallel zu der Grundplatte 35 verläuft. Ihre genau Erstreckung ist experimentell zu ermitteln und richtet sich nach den jeweiligen Gegebenheiten.

Der Steuerhebel 42 ist ein zweiarmiger Hebel aus den Armen 45 und 46. An der Übergangsstelle zwischen den beiden Armen 45 und 46 ist der Steuerhebel 42 auf einer Achse 47 schwenkbar gelagert. Die Achse 47 ist in der Zeichnung lediglich schematisch dargestellt. Sie kann von einem entsprechenden Niet gebildet sein, der in der Nähe der Oberkante 33 in der Seitenwand 32 vernietet ist. Auf diesem Niet ist der Steuerhebel 42 um eine Achse leicht schwenkbar, die parallel zu der Achse der Achsenstange 40 liegt. Die Lage der Achse 47 ist bedarfsweise experimentell zu ermitteln. Ihre Positionierung ergibt sich aus der weiter unten gegebenen Funktionsbeschreibung. Grundsätzlich liegt sie, wie die Zeichnung erkennen lässt, etwa senkrecht unterhalb der Kurvenbahn 44.

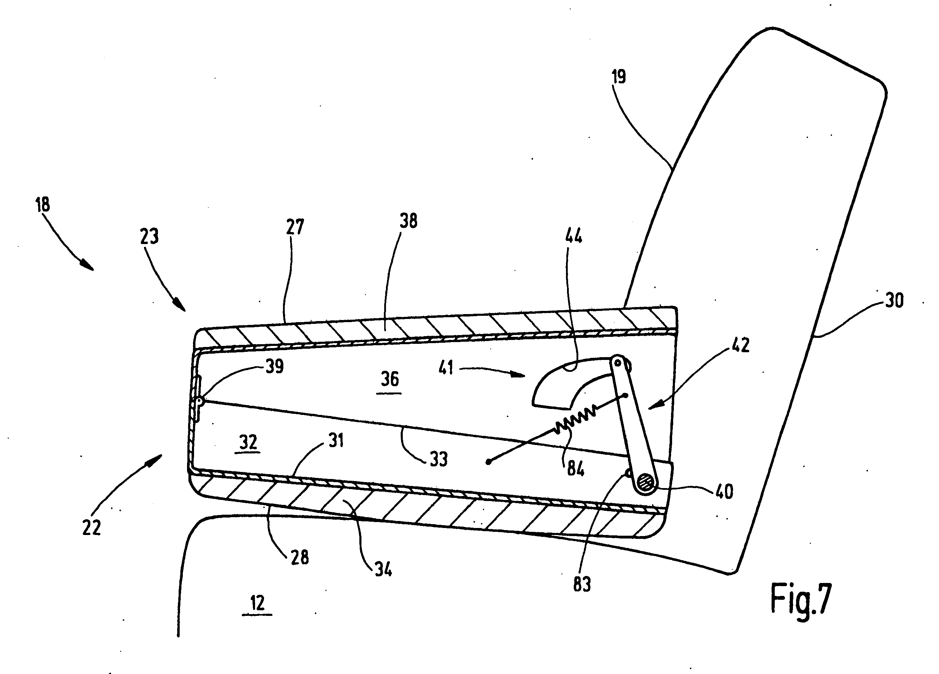

An dem freien Ende des Arms 45 ist ein in die Tasche 44 hineinragender und mit der Nockenbahn 44 zusammenwirkender Abtastzapfen 48 (Fig. 7) vernietet. Von dem Abtastzapfen ist lediglich dessen Nietkopf 49 zu sehen.

Das freie Ende des anderen Arms 46 ist gelenkig mit dem Koppelhebel 43 verbunden. Der Koppelhebel 43 verbindet den Arm 46 mit einer Lasche 51, die drehfest auf der Achsstange 40 innerhalb des Unterteils 22 sitzt. Die Lasche 51 zeigt nach oben. Sie ist so angeordnet, dass sie in keiner Schwenkstellung mit der Grundplatte 31 kollidiert.

Der Mechanismus 26 kann spiegelbildlich auch im Bereich der weggeschnittenen Seitenwände 32 beziehungsweise 36 vorhanden sein, um auf beiden Seiten eine entsprechende Abstützung des Oberteils 23 gegenüber dem Unterteil 22 zu erreichen. Bei genügender Verwindungssteifigkeit würde es jedoch auch genügen, die Tasche 41 als entsprechende Öffnung in einer Mittelwand vorzusehen, die sich mittig zwischen den beiden Seitenwänden 36 befindet. Die mittige Anordnung würde die später erläuterte Hubverstellbarkeit erleichtern. Die Verwindungssteifigkeit würde im Fall lediglich eines einzigen Mechanismus 26 über das Scharnier 39 erreicht werden.

Die Funktion des Mechanismus 26 ist wie folgt: In der heraufgeklappten Stellung gemäß Fig. 5 liegt die Mittelarmlehne 18 mit ihrem Polster 38 an einer Schottwand 30 an. Das Oberteil 23 ist gegenüber dem Unterteil 22 maximal zusammengeklappt, damit in Dickenrichtung kein Platzbedarf entsteht, der die Mittearmlehne 18 über die Fläche der beiden Rückenlehnenabschnitte 16 und 17 überstehen lassen würde. In der hochgeklappten Stellung gemäß Fig. 5 ist außerdem der Steuerhebel 42 auf seiner Achse so geschwenkt, dass er unter einem sehr spitzen Winkel gegenüber der Oberkante 33 verläuft. Hierdurch befindet er sich im hinteren beziehungsweise unteren Teil der Nockenbahn 44. Außerdem ist der Abtastzapfen 48 auf diese Weise unmittelbar an die Oberkante 33 angenähert. Er beschränkt somit die Einklappbewegung nicht. Darüber hinaus kann bei entsprechendem Verlauf der Nockenbahn 44 gegenüberliegenden Kante der Tasche 41 dafür gesorgt werden, dass aktiv durch die Bewegung des Abtastzapfen 48 das Oberteil 23 an das Unterteil 22 herangezogen wird, um eine Streifbewegung zwischen dem Polster 38 und der Schottwand 30 zu vermeiden.

Wenn ausgehend von dieser Stellung der Benutzer die Mittelarmlehne 18 aus der Stellung nach Fig. 5 in die Stellung nach Fig. 4 herunter schwenkt, verursacht die Relativbewegung über den Koppelhebel 43 eine Drehbewegung des Steuerhebels 42 im Gegenurzeigersinn bezogen auf die Darstellung in den Figuren. Gegenüber der Oberkante 33 richtet sich somit der Steuerhebel 42 auf und der Abtastzapfen 48 wird in eine maximal beabstandete Stellung gegenüber der Oberkante 33 beziehungsweise der Grundplatte 31 gebracht. Durch entsprechenden Verlauf der Nockenbahn 44 wird dafür gesorgt, dass das Oberteil von dem Unterteil 22 hinreichend weit weg geschwenkt wird. Die Schwenkbewegung erfolgt um die Achse des Scharniers 39. Die Kraft hierzu wird, wie die Figuren erkennen lassen, in der Nähe der Hinterkante der Mittelarmlehne 18 und somit an einer von dem Scharnier 39 weit abliegenden Stelle eingeleitet. Beim Hochklappen wird über den Koppelhebel 43 in Verbindung mit der ortsfesten Lasche 51 dafür gesorgt, dass der Steuerhebel 42 sich bezüglich der Achse 47 im Uhrzeigersinn dreht, womit der Abtastzapfen 48 zu der Grundplatte 31 hin bewegt wird. Das Oberteil 23 erhält damit die Möglichkeit, in Richtung auf das Unterteil 22 schwenken zu können, um die Dicke im Bereich der Hinterkante der Mittelarmlehne 18 an die Dicke bei den beiden Stirnflächen 24 und 25 anzupassen.

Das Herunterschwenken des Oberteils 23 kann entweder aufgrund des Eigengewichts erfolgen in dem Maße, indem die Lage des Abtastzapfen 48 eine solche Bewegung ermöglicht, oder indem bei entsprechender Gestaltung der Tasche 41 der Abtastzapfen 48 gegen die der Nockenbahn 44 gegenüberliegende Kante beziehungsweise Rand der Tasche 41 einwirkt und das Oberteil 23 heranzieht.

Aus Fig. 4 ist leicht zu erkennen, dass der Schwenkhub, den das Oberteil 22 gegenüber dem Unterteil 22 vollführt, wenn die Mittearmlehne 18 zwischen den beiden Stellungen gemäß 4 und 5 hin und her geschwenkt werden kann, durch Änderung der Länge des Armes 45 erreicht werden kann.

Fig. 6 zeigt in schematisierter Form einen Ausschnitt aus dem Mechanismus 26, um die gewünschte Armlängenveränderung zu erreichen.

Der Steuerhebel 42 setzt sich gemäß Fig. 6 aus zwei Stangen 52 und 53 zusammen. Die beiden Stangen 52 und 53 haben ein flaches Vierkantprofil und liegen mit ihren Flachseiten in montiertem Zustand aneinander. In der Stange 52 sind übereinander auf der selben Achse insgesamt drei Bohrungen 54, 55 und 56 angebracht. In der Bohrung 56 sitzt ein Niet 57, der den Steuerhebel 42 gelenkig mit der Kuppelstange 43 verbindet. Der Niet 57 führt mit seinem Schaft durch die Bohrung 56 und eine entsprechende Bohrung in der Kuppelstrebe 43.

Die Bohrung 55 bildet eine Achsbohrung, mit deren Hilfe der Steuerhebel 42 auf der Achse 47 schwenkbar gelagert ist. Die Achse wird von einem Niet 58 gebildet, der einen abgestuften Schaft 59 aufweist, der von einem Nietkopf 61 ausgeht. Gegenüber dem Schaft 59 trägt der Nietkopf 61 einen weiteren Schaft 62, mit dem der Niet 58 in der Seitenwand 32 vernietet ist.

Die Stange 53 enthält ein Langloch 63 mit parallelen Flanken. Das Langloch 63 erstreckt sich parallel zur Längserstreckung der Stange 53. Die Weite des Langlochs 53 entspricht dem dickeren Bereich des Schaftes 59 des Niets 58.

Durch das Langloch führt in montiertem Zustand ein weiterer Niet 64, der ebenfalls einen abgestuften Schaft 65 aufweist. Der im Durchmesser dickere Teil des Schaftes 65 ist an die Breite des Langloches 63 angepasst und hat dieselbe Länge wie der im Durchmesser größere Abschnitt des Schaftes 59. Die Länge dieser Bereiche mit größerem Durchmesser auf den beiden Schäften 59 und 65 entspricht der Dicke der Stange 53.

Oberhalb des Langlochs 63 ist in der Stange 53 eine Bohrung 66 enthalten, die den Schaft 49 des Abtastezapfens 48 aufnimmt, der darin vernietet ist.

Im montierten Zustand führt der Niet 64 mit seinem Schaft 65 durch das Langloch 63 und schließlich in die Bohrung 54. In dieser ist der Niet 64 vernietet. Der Schaft 59 führt ebenfalls durch das Langloch 63, jedoch gegenüber dem Niet 64 in Längsrichtung des Langloches 63 deutlich versetzt und kragt schließlich aus der Bohrung 55 heraus. Der überstehende Teil des Schaftes 59 dient als Lager für eine Rastklinke 67.

Mit Hilfe der beiden Nieten 58 und 64 wird in Verbindung mit dem Langloch 63 eine Parallelführung erreicht, die es gestattet, die Stange 53 spielarm gegenüber der Stange 52 zu verschieben, und zwar parallel zur Längsrichtung der beiden Stangen 52 und 53.

Am oberen Ende der Stange 52 sowie am unteren Ende der Stange 53 ist jeweils ein Arm 68 und 69 vorhanden. Diese beiden Arme 68 und 69 sind entsprechend voneinander beabstandet und dienen als Wiederlager für eine Zugfeder 71. Mit Hilfe der Zugfeder 71 werden die Stangen 52 und 53 so aufeinander vorgespannt, dass der Abtastzapfen 48 den größtmöglichen Abstand von der Drehachse 47 beziehungsweise der Bohrung 55 hat.

Auf der von den Armen 68 und 69 abliegenden Seite sind auf der Schmalseite der Stange 53 übereinander mehrere Zähne 72 vorgesehen, zwischen denen Zahnlücken 73 gebildet sind.

Die Rastklinke 67 setzt sich aus einer Lasche 74 und einer an der Lasche 74 ausgebildeten Rastnase 75 zusammen. In der Lasche 74 ist eine Bohrung 76 angebracht, mit deren Hilfe die Rastklinke 67 auf dem Schaft 59 drehbar gelagert ist. Die Rastklinke 67 ist kann infolge ihrer Gestalt in die Zahnlücken 73 eingreifen.

Im montierten Zustand ist der Schaft 59 so vernietet, dass die Rastklinke 67 lose drehbar ist.

Seitlich versetzt neben der Lagerbohrung 76 trägt die Lasche 74 einen Zapfen 77, der in die entgegengesetzte Richtung zeigt wie die Rastnase 75. Auf dem Zapfen 77 sitzt mit einer entsprechenden Bohrung 78 eine Betätigungsstange 79, die an ihrem abliegenden Ende in eine Querstrebe 81 übergeht. An der Querstrebe 81 ist der Betätigungsknopf 29 befestigt. Mittels einer Zugfeder 82 wird die Betätigungsstange 79 so vorgespannt, dass die Rastnase 75 in die Zahnlücken 73 vorgespannt ist.

Die Funktionsweise ist wie folgt: Wenn die Mittelarmlehne 18 gemäß Fig. 4 heruntergeklappt ist, kann der Benutzer den Betätigungsknopf 29 drücken. Hierdurch wird die Betätigungsstange 79 gegen die Wirkung der Zugfeder 82 längs verschoben. Durch die Verschiebung wird die Rastklinke 67 verschwenkt und ihre Rastnase 75 kommt aus der betreffenden Zahnlücke 73 frei, in der sie vor der Betätigung des Betätigungsknopfes 29 gelegen ist. Wenn sich der Benutzer in dieser Stellung nicht auf das Oberteil 23 stützt, wird die Zugfeder 71 die Stange 53 nach oben ausfahren soweit, bis der untere gekrümmte Rand des Langlochs 63 an dem Schaft 59 anliegt. Die Mittelarmlehne 18 hat damit im Bereich ihres hinteren Endes die maximale Dicke. Wenn sich hingegen der Benutzer auf das Oberteil 23 aufstützt, wird das Oberteil 23 heruntergedrückt und die Stange 53 dadurch gegenüber der Stange 52 nach unten verschoben, bis der obere Rand des Langlochs 63 auf dem Schaft 65 aufliegt. Die Armlehne 18 hat damit im Bereich ihrer Hinterkante die geringste Dicke entsprechend Fig. 3.

Bei der Längsbewegung der Stange 53 bleibt die Stange 52 in dem Unterteil 22 ortsfest. Die vertikale Betätigungskraft, mit der der Benutzer auf das Oberteil 23 einwirkt, wird von der Achse 47 gebildet und durch den Niet 58 aufgenommen.

Nach Erreichen der richtigen Einstellung lässt der Benutzer den Betätigungsknopf 29 los, womit die Feder 82 die Betätigungsstange 79 wieder in die Ausgangslage zurückziehen kann. Hierdurch wird die Rastklinke 67 auf dem Zapfen 59 verschwenkt und die Rastnase 75 dringt in die entsprechende Zahnlücke 73 ein. Das Ende der Schwenkbewegung ist erreicht, wenn die Rastnase den Grund der Zahnlücke 23 erreicht hat.

Die Rastnase 75 verriegelt, wenn sie in der Zahnlücke 73 sitzt, jede Längsbewegung der Stange 53 gegenüber der Stange 52.

Wie sich aus der Erläuterung ergibt, bildet der über die Bohrung 55 nach oben überstehende Abschnitt der Stange 53 den Arm 45, während die Stange 52 im Bereich zwischen der Bohrung 55 und der Bohrung 56 den Arm 46 darstellt.

Wenn der Steuerhebel 42 gemäß Fig. 6 seine kürzeste Erstreckung hat, macht entsprechend der Abtastzapfen 48 eine Kreisbogenbewegung auf einem Kreis mit einem kleineren Radius. Aus diesem Grund ist die Tasche 44 angenähert dreieckförmig.

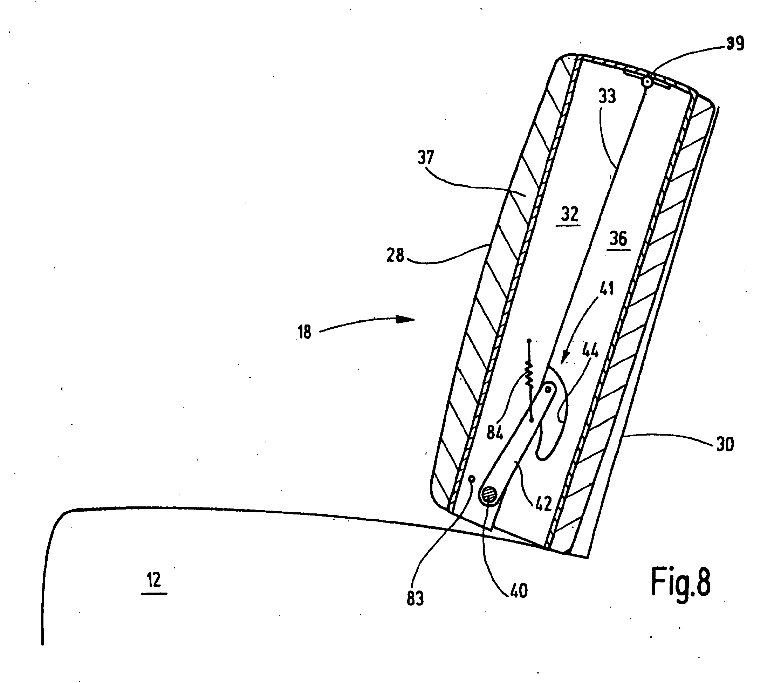

Die Figuren 7 und 8 zeigen eine andere Ausführungsform des Mechanismus 26 um die beiden Teile 22 und 23 der Armlehne 18 gegeneinander zu bewegen. Der Steuerhebel 42 ist hierbei ein einarmiger Steuerhebel, der unmittelbar auf der Achsstange 40 schwenkbar gelagert ist.

In Richtung auf die Stirnseiten 24 und 25 befindet sich innerhalb der durch das Unterteil und das Oberteil 22, 23 gebildeten Mittelarmlehne ein orstfester Anschlagzapfen 83 für den Steuerhebel 42. Der Anschlagzapfen 83 kann beispielsweise auf einer Lasche ähnlich der Lasche 51 sitzen. Diese Lasche ist in den Fig. 7 und 8 nicht gezeigt um den Anschlagzapfen 83 und den Steuerhebel 42 sowie deren Zusammenwirken sehen zu können. Mittels einer Zugfeder 84 wird der Steuerhebel 42 gegen den Anschlagzapfen 83 vorgespannt. Die Zugfeder ist hierzu einends an dem Steuerhebel 42 und andernends an der Seitenwand 32 wie gezeigt verankert.

Im Übrigen trägt der Steuerhebel 42, wie zuvor beschrieben, den Abtastzapfen 48, der in die Tasche 41 eingreift um die Nockenbahn 44 abzutasten. Da der Hebel in der entgegen gesetzten Richtung schwenkt, verglichen mit dem Steuerhebel 42 nach Fig. 4, ist konsequenterweise auch die Tasche 41 umgekehrt orientiert.

Bei heruntergeklappter Mittelarmlehne 18 steht der Steuerhebel 42 wie gezeigt weitgehend senkrecht, so dass sich das Oberteil 23 über die Nockenbahn 44 und den Steuerhebel 42 auf der Achsstange 40 abstützen kann, wenn die Mittelarmlehne 18 von oben belastet wird. Beim Heraufschwenken in die Position nach Fig. 8 gleitet zunächst einmal die Nockenbahn 44 an dem Abtastzapfen 48 entlang und ermöglich, dass sich das Oberteil 23 im Bereich der Hinterkante an das Unterteil annähern kann, mit anderen Worten, die Armlehne 18 beginnt zusammenzuklappen. Im Verlauf der Schwenkbewegung wird irgendwann die Oberkante 33 mit dem Abtastzapfen 48 kollidieren, so dass bei der weiteren Bewegung der Steuerhebel 42 von dem Anschlagzapfen 83 abgehoben wird.

Die Endstellung ist in Fig. 8 gezeigt.

Es bedarf keiner weiteren ausführlichen Erläuterung, um zu erkennen, dass der Steuerhebel 42 in gleicher Weise, wie dies in Verbindung mit dem Steuerhebel 42 nach Fig. 4 erläutert ist, in der Länge verstellbar gestaltet werden kann. Hierzu genügt es beispielsweise, wenn der Steuerhebel 42 gemäß Fig. 6 im Bereich der unteren Bohrung 56 auf der Achstange 40 gelagert wird und außerdem die Kuppelstrebe 43 weggelassen wird. Im Übrigen ist die Arbeitsweise wie in Verbindung mit Fig. 6 erläutert.

Eine Mittelarmlehne für Rücksitzlehnen von Pkw setzt sich aus einem Armlehnenoberteil und einem Armlehnenunterteil zusammen, die mittels eines Scharniers aneinander angebunden sind. Das Scharnier befindet sich an der Stirnseite der Mittelarmlehne. In der im wesentlichen hohlen Mittelarmlehne befindet sich ein Steuermechanismus, durch den vorzugsweise selbsttätig die Dicke der Mittelarmlehne reguliert wird, wenn die Mittelarmlehne aus der Nichtgebrauchsstellung, in der sie als Rückenlehnenteil fungiert in die Armlehnenposition herunter geschwenkt wird.

## Patentansprüche

1. Rücksitzlehne (13) eines Kraftfahrzeugs,
mit einem in der Rücksitzlehne (13) enthaltenen viereckigen Zwischenraum, der die Rückenlehne (13) in einen linken und einen rechten Abschnitt (16,17) aufteilt,
mit einer Armlehne (18), die sich in der hochgeklappten Stellung in der Zwischenraum befindet und in der herunter geklappten Stellung aus der Rücksitzlehne (13) vorkragt und die in Längsrichtung in zwei Teile (22,23) geteilt ist, von denen der eine Teil bezogen auf die heruntergeklappte Stellung das Unterteil (22) und der andere Teil das Oberteil (23) bildet, das eine Polsterfläche (38) aufweist, die bei heruntergeklappter Armlehne (18) nach oben zeigt.
mit einem Scharniergelenk (39), über das die beiden Teile (22,23) miteinander verbunden sind, derart, dass die beiden Armlehnenteile (22,23) lediglich bezüglich einer Achse gegeneinander verschwenkbar sind, wobei die Scharnierachse horizontal sowie quer zur Längsachse der Armlehne (18) sowie des Kraftfahrzeugs verläuft, womit die Scharnierachse parallel zur Schwenkachse (40) liegt, um die herum die Armlehne (18) in die Armlehnenstellung herunterklappbar ist, und
mit einem Mechanismus (26), durch den die beiden Teile (22,23) in der heruntergeklappten Stellung an ihrem von dem Gelenk (39) abliegenden Ende auf Abstand voneinander gehalten werden.

2. Rücksitzlehne nach Anspruch 1, **dadurch gekennzeichnet, dass** die Armlehne (18) um eine ortsfeste Achse (40) schwenkbar ist, die in dem Zwischenraum liegt und horizontal sowie quer zur Fahrzeuglängsachse verläuft.

3. Rücksitzlehne nach Anspruch 1, **dadurch gekennzeichnet, dass** sich die Achse (40) in der Nähe der Unterkante der Rücksitzlehne (13) befindet.

4. Rücksitzlehne nach Anspruch 1, **dadurch gekennzeichnet, dass** die Achse (40) in der Nähe der dem Benutzer zugekehrten Fläche der Rücksitzlehne (13) angeordnet ist.

5. Rücksitzlehne nach Anspruch 1, **dadurch gekennzeichnet, dass** die Achse (40) von einer Stange gebildet ist.

6. Rücksitzlehne nach Anspruch 1, **dadurch gekennzeichnet, dass** das Armlehnenoberteil (23) zwei Seitenwände (36) sowie eine Stirnwand (24) aufweist.

7. Rücksitzlehne nach Anspruch 1, **dadurch gekennzeichnet, dass** das Armlehnenunterteil (22) eine Polsterfläche (34) aufweist, die bei heraufgeklappter Armlehne (18) in dieselbe Richtung zeigt wie die Rücksitzlehne (13).

8. Rücksitzlehne nach Anspruch 1, **dadurch gekennzeichnet, dass** das Armlehnenunterteil (22) zwei Seitenwände (32) und eine Stirnwand (25) aufweist, die bei heraufgeklappter Armlehne (18) nach oben zeigt.

9. Rücksitzlehne nach Anspruch 1, **dadurch gekennzeichnet, dass** das Gelenk (39) im Bereich des vorderen Endes der Armlehne (18) angeordnet ist, das bei heraufgeklappter Armlehne (18) nach oben zeigt.

10. Rücksitzlehne nach Anspruch 1, **dadurch gekennzeichnet, dass** der Oberteil (23) das Unterteil (22) der Armlehne (18) teleskopartig übergreift.

11. Rücksitzlehne nach Anspruch 1, **dadurch gekennzeichnet, dass** der Mechanismus (26) derart gestaltet ist, dass das Armlehnenoberteil (23) und das Armlehnenunterteil (22) beim Herunterschwenken der Armlehne (18) in die Armlehnenstellung selbsttätig das Armlehnenoberteil (23) vom Armlehnenunterteil (22) um einen vorbestimmten Hub weg bewegt.

12. Rücksitzlehne nach Anspruch 11, **dadurch gekennzeichnet, dass** der Mechanismus (26) zum Verschwenken des Armlehnenoberteils (23) gegenüber dem Armlehnenunterteil (22) einen verstellbaren Hub aufweist.

13. Rücksitzlehne nach Anspruch 1, **dadurch gekennzeichnet, dass** der Mechanismus (26) in wenigstens einem der Armlehnenteile (22,23) zumindest eine Kurvenbahn (44) vorzugsweise zwei Kurvenbahnen (44) aufweist, von denen jede neben einer der Seiten (32,36) der Armlehne (18) angeordnet ist.

14. Rücksitzlehne nach Anspruch 13, **dadurch gekennzeichnet, dass** die Kurvenbahn (44) in dem Armlehnenoberteil (23) angeordnet ist.

15. Rücksitzlehne nach Anspruch 15, **dadurch gekennzeichnet, dass** der Mechanismus (26) einen Steuerhebel (42) aufweist, der mit der Kurvenbahn (44) zusammenwirkt.

16. Rücksitzlehne nach Anspruch 15, **dadurch gekennzeichnet, dass** die effektive Länge des Steuerhebels (42) verstellbar ist.

17. Rücksitzlehne nach Anspruch 15, **dadurch gekennzeichnet, dass** der Steuerhebel (42) in dem Armlehnenunterteil (22) um eine zu der Schwenkachse (40) parallel Achse (47,59) bewegbar ist.

18. Rücksitzlehne nach Anspruch 15, **dadurch gekennzeichnet, dass** der Steuerhebel (42) als zweiarmiger Hebel ausgebildet ist, von denen ein Arm (45) mit einer Kurvenbahn (44) zusammenwirkt und der andere (46) an einer Koppelstrebe (43) angebunden ist, die an einem ortsfesten Widerlager (51) schwenkbar gehalten ist.

19. Rücksitzlehne nach Anspruch 18, **dadurch gekennzeichnet, dass** die Länge des mit der Kurvenbahn (44) zusammenwirkenden Arms (45) verstellbar ist.

20. Rücksitzlehne nach Anspruch 16, **dadurch gekennzeichnet, dass** der Steuerhebel (42) von einem einarmigen Hebel gebildet ist.

21. Rücksitzlehne nach Anspruch 20, **dadurch gekennzeichnet, dass** dem einarmigen Hebel (42) ein Anschlag (83) zugeordnet ist, der ortsfest ist, und dass der einarmige Hebel (42) durch eine Feder (84) gegen diesen Anschlag (83) elastisch vorgespannt ist.

22. Rücksitzlehne nach Anspruch 20, **dadurch gekennzeichnet, dass** der einarmige Hebel (42) längenverstellbar ist,

23. Rücksitzlehne nach Anspruch 15 oder 20, **dadurch gekennzeichnet, dass** der längenverstellbare Hebel (42) oder Arm (45) zwei längliche Teile (52,53) aufweist, die aneinander geführt sind.

24. Rücksitzlehne nach Anspruch 23, **dadurch gekennzeichnet, dass** die beiden Teile (52,53) durch eine Feder (71) im Sinne einer Verlängerung des aus den beiden Teilen (52,53) bestehenden Arms (45) oder Hebels (42) vorgespannt sind.

25. Rücksitzlehne nach Anspruch 23, **dadurch gekennzeichnet, dass** den beiden Teilen (52,53) eine Rasteinrichtung (67,72) zugeordnet ist, die dazu eingerichtet ist, eine voreingestellte Relativlage zwischen den beiden Teilen (52,53) des Hebels (42) oder Arms (45) zu fixieren.

26. Rücksitzlehne nach Anspruch 25, **dadurch gekennzeichnet, dass** die Rasteinrichtung (67,72) mit einem Betätigungsknopf (29) gekuppelt ist, um die Rasteinrichtung (67,72) willkürlich lösen zu können.

27. Rücksitzlehne nach Anspruch 25, **dadurch gekennzeichnet, dass** die Rasteinrichtung (67,72) zumindest in jener Richtung formschlüssig wirkt, in der der Arm (45) oder Hebel (42) Kraft aufnimmt, wenn sich der Benutzer auf die Armlehne (18) aufstützt.

## Claims

1. Rear seat back rest (13) for a motor vehicle,
with a square space contained in the rear seat back rest (13), which divides the back rest (13) into a left and a right section (16, 17),
with an arm rest (18), which is located in the space when in the folded-up position and projects out of the rear seat back rest (13) when in the folded-down position and which is divided into two parts (22, 23) in the longitudinal direction, of which one part forms the lower part (22) with respect to the folded-down position and the other part forms the upper part (23), which has a cushioned surface (38), which faces upwards when the arm rest (18) is folded down,
with a hinge joint (39), by means of which the two parts (22, 23) are connected to one another in such a manner that the two arm rest parts (22, 23) can only be pivoted relative to one another with respect to one axis, wherein the hinge axis runs horizontally as well as transversely to the longitudinal axis of the arm rest (18) and also the motor vehicle, as a result of which the hinge axis lies parallel to the pivot axis (40), around which the arm rest (18) can be folded down into the arm rest position, and
with a mechanism (26), by means of which the two parts (22, 23) are held at a distance from one another in the folded-down position at their end remote from the joint (39).

2. Rear seat back rest according to claim 1, **characterised in that** the arm rest (18) can be pivoted around a fixed axis (40), which lies in the space and runs horizontally as well as transversely to the longitudinal axis of the motor vehicle.

3. Rear seat back rest according to claim 1, **characterised in that** the axis (40) is located in the vicinity of the lower edge of the rear seat back rest (13).

4. Rear seat back rest according to claim 1, **characterised in that** the axis (40) is arranged in the vicinity of the surface of the rear seat back rest (13) facing the user.

5. Rear seat back rest according to claim 1, **characterised in that** the axis (40) is formed by a rod.

6. Rear seat back rest according to claim 1, **characterised in that** the upper part (23) of the arm rest has two side walls (36) and also a front wall (24).

7. Rear seat back rest according to claim 1, **characterised in that** the lower part (22) of the arm rest has a cushioned surface (34), which when the arm rest is folded down faces in the same direction as the rear seat back rest (13).

8. Rear seat back rest according to claim 1, **characterised in that** the lower part (22) of the arm rest has two side walls (32) and a front wall (25), which points upwards when the arm rest (18) is folded up.

9. Rear seat back rest according to claim 1, **characterised in that** the joint (39) is arranged in the region of the front end of the arm rest (18), which points upwards when the arm rest (18) is folded up.

10. Rear seat back rest according to claim 1, **characterised in that** the upper part (23) engages over the lower part (22) of the arm rest (18) in a telescopic manner.

11. Rear seat back rest according to claim 1, **characterised in that** the mechanism (26) is configured such that the upper part (23) of the arm rest and the lower part (22) of the arm rest when the arm rest (18) is pivoted down into the arm rest position the upper part (23) of the arm rest automatically moves away from the lower part (22) of the arm rest by a predetermined stroke.

12. Rear seat back rest according to claim 11, **characterised in that** the mechanism (26) has an adjustable stroke for pivoting the upper part (23) of the arm rest in relation to the lower part (22) of the arm rest.

13. Rear seat back rest according to claim 1, **characterised in that** in at least one of the arm rest parts (22, 23) the mechanism (26) has at least one curved track (44), preferably two curved tracks (44), each of which is arranged next to one of the sides (32, 36) of the arm rest (18).

14. Rear seat back rest according to claim 13, **characterised in that** the curved track (44) is arranged in the upper part (23) of the arm rest.

15. Rear seat back rest according to claim 15, **characterised in that** the mechanism (26) has a control lever (42), which cooperates with the curved track (44).

16. Rear seat back rest according to claim 15, **characterised in that** the effective length of the control lever (42) is adjustable.

17. Rear seat back rest according to claim 15, **characterised in that** the control lever (42) in the lower part (22) of the arm rest is movable around an axis (47, 59) parallel to the pivot axis (40).

18. Rear seat back rest according to claim 15, **characterised in that** the control lever (42) is configured as a two-armed lever, of which one arm (45) cooperates with a curve track (44) and the other (46) is attached to a coupling strut (43), which is held to pivot on a fixed abutment (51).

19. Rear seat back rest according to claim 18, **characterised in that** the length of the arm (45) cooperating with the curved track (44) is adjustable.

20. Rear seat back rest according to claim 16, **characterised in that** the control lever (42) is formed by a one-armed lever.

21. Rear seat back rest according to claim 20, **characterised in that** the one-armed lever (42) has an associated stop (83), which is fixed, and that the one-armed lever (42) is elastically biased against this stop (83) by means of a spring (84).

22. Rear seat back rest according to claim 20, **characterised in that** the one-armed lever (42) is adjustable in length.

23. Rear seat back rest according to claim 15 or 20, **characterised in that** the length-adjustable lever (42) or arm (45) has two elongated parts (52, 53), which adjoin to one another.

24. Rear seat back rest according to claim 23, **characterised in that** the two parts (52, 53) are biased by a spring (71) in the sense of an extension of the arm (45) or lever (42) comprising the two parts (52, 53).

25. Rear seat back rest according to claim 23, **characterised in that** the two parts (52, 53) have an associated locking means (67, 72), which is arranged to fix a preset relative position between the two parts (52, 53) of the lever (42) or the arm (45).

26. Rear seat back rest according to claim 25, **characterised in that** the locking means (67, 72) is coupled to an operating button (29) to allow the locking means (67, 72) to be released as required.

27. Rear seat back rest according to claim 25, **characterised in that** the locking means (67, 72) acts positively at least in the direction, in which the arm (45) or lever (42) absorbs force when the user leans on the arm rest (18).

## Revendications

1. Dossier (13) d'un véhicule automobile, qui comprend :
- un volume intermédiaire quadrangulaire, contenu dans ce dossier et le divisant en une partie gauche et une partie droite (15, 17),
- un accoudoir (18) qui se trouve à l'état relevé dans le volume intermédiaire tandis qu'à l'état rabattu vers le bas il fait saillie sur le dossier (13), en étant divisé selon la direction longitudinale en deux parties dont l'une forme, dans la position rabattue, la partie inférieure (22) tandis que l'autre partie forme la partie supérieure (23) qui présente une surface de coussin (38) regardant vers le haut quand l'accoudoir (18) est rabattu,
- une articulation à charnière (39), par laquelle sont reliées les deux parties (22, 23) de manière que celles-ci puissent basculer simplement autour d'un axe l'une par rapport à l'autre, l'axe de charnière horizontal étant perpendiculaire à l'axe longitudinal du dossier (18) ainsi qu'à celui du véhicule et également parallèle à l'axe de basculement (40) autour duquel l'accoudoir (18) peut être rabattu en position active,
- un mécanisme (26) par lequel les deux parties (22, 23), sont en position rabattue, sont maintenus espacés l'un de l'autre à leurs extrémités éloignées de l'articulation (39).

2. Dossier selon la revendication 1, **caractérisé en ce que** l'accoudoir (18) peut basculer autour d'un axe fixe (40), situé dans le volume intermédiaire, horizontal et perpendiculaire à l'axe longitudinal du véhicule.

3. Dossier selon la revendication 1, **caractérisé en ce que** l'axe (40) se trouve à proximité du bord inférieur du dossier (13).

4. Dossier selon la revendication 1, **caractérisé en ce que** l'axe (40) se trouve à proximité de la surface du dossier (13) en regard de l'utilisateur.

5. Dossier selon la revendication 1, **caractérisé en ce que** l'axe (40) est constitué par une tige.

6. Dossier selon la revendication 1, **caractérisé en ce que** la partie supérieure (23) de l'accoudoir présente deux parois latérales (36) et une paroi frontale (24).

7. Dossier selon la revendication 1, **caractérisé en ce que** la partie inférieure (22) de l'accoudoir présente une surface de coussin (34) qui regarde dans la même direction que le dossier (13) quand l'accoudoir (18) est relevé.

8. Dossier selon la revendication 1, **caractérisé en ce que** la partie inférieure de l'accoudoir (22) présente deux parois latérales (32) et une paroi frontale (25) qui regarde vers le haut quand l'accoudoir (18) est relevé.

9. Dossier selon la revendication 1, **caractérisé en ce que** l'articulation (39) est disposée dans la zone de l'extrémité avant de l'accoudoir (18), cette extrémité regardant vers le haut quand l'accoudoir (18) est relevé.

10. Dossier selon la revendication 1, **caractérisé en ce que** la partie supérieure (23) est en prise par dessus de manière télescopique avec la partie inférieure (22) de l'accoudoir (18).

11. Dossier selon la revendication 1, **caractérisé en ce que** le mécanisme (26) est constitué de manière que la partie supérieure (23) et la partie inférieure (22) de l'accoudoir, quand celui-ci se rabat pour venir en position active, se déplacent automatiquement l'une par rapport à l'autre, la partie supérieure (23) s'éloignant de la partie inférieure (22) d'une distance prédéfinie.

12. Dossier selon la revendication 11, **caractérisé en ce que** le mécanisme (26) servant à faire basculer partie supérieure (23) de l'accoudoir par rapport à la partie inférieure (22) de celui-ci présente une course réglable.

13. Dossier selon la revendication 1, **caractérisé en ce que** le mécanisme (26) présente dans au moins une des parties (22, 23) de l'accoudoir une piste incurvée (44), de préférence deux pistes incurvées (44), disposées chacune près d'un des côtés (32, 36) de l'accoudoir (18).

14. Dossier selon la revendication 13, **caractérisé en ce que** la piste incurvée (44) est disposée dans la partie supérieure (23) de l'accoudoir.

15. Dossier selon la revendication 13, **caractérisé en ce que** le mécanisme (26) présente un levier de commande (42) qui coopère avec la piste incurvée (44).

16. Dossier selon la revendication 15, **caractérisé en ce que** la longueur effective du levier de commande (42) est réglable.

17. Dossier selon la revendication 15, **caractérisé en ce que** le levier de commande (42) peut se déplacer dans la partie inférieure (22) de l'accoudoir, autour d'un axe (47, 49) parallèle à l'axe de basculement (40).

18. Dossier selon la revendication 15, **caractérisé en ce que** le levier de commande (42) est un levier à deux bras dont l'un (45) coopère avec une piste incurvée (44) tandis que l'autre est raccordé à une tige d'accouplement (43) qui est montée basculante sur un contrepalier (51) fixe.

19. Dossier selon la revendication 18, **caractérisé en ce que** la longueur du bras (45) coopérant avec la piste incurvée (44) est réglable.

20. Dossier selon la revendication 16, **caractérisé en ce que** le levier de commande (42) est un levier à un bras.

21. Dossier selon la revendication 20, **caractérisé en ce qu'**au levier à un bras (42) est associée une butée (83) qui est fixe, et que ce levier est précontraint élastiquement sur cette butée par un ressort (84).

22. Dossier selon la revendication 20, **caractérisé en ce que** le levier à un bras (42) est réglable en longueur.

23. Dossier selon la revendication 15 ou 20, **caractérisé en ce que** le levier (42) à longueur réglable ou le bras (45) présente deux parties allongées (52, 53) guidées l'une le long de l'autre.

24. Dossier selon la revendication 23, **caractérisé en ce que** les deux parties (52, 53) sont précontraintes par un ressort (71) dans le sens d'un allongement du bras (45) constitué des deux parties (52, 53) ou du levier (42).

25. Dossier selon la revendication 23, **caractérisé en ce qu'**aux deux parties (52, 53) est associé un dispositif d'arrêt (67, 72) qui est conçu pour rendre fixe la position relative préréglée des deux parties (52, 53) du levier (42) ou du bras (45).

26. Dossier selon la revendication 25, **caractérisé en ce que** le dispositif d'arrêt (67, 72) est accouplé à une tête d'actionnement (29), afin de pouvoir libérer volontairement le dispositif d'arrêt.

27. Dossier selon la revendication 26, **caractérisé en ce que** le dispositif d'arrêt (67, 72) agit avec verrouillage par combinaison de formes dans au moins la direction selon laquelle le bras (45) ou le levier (42) reçoit la force qui se produit quand l'utilisateur s'appuie sur l'accoudoir (18).
